Europäisches Patentamt

European Patent Office

Office européen des brevets

(19)

(11) **EP 1 248 453 A2**

(12) **EUROPEAN PATENT APPLICATION**

(43) Date of publication:
**09.10.2002 Bulletin 2002/41**

(51) Int Cl.⁷: **H04N 1/407**

(21) Application number: **02007164.3**

(22) Date of filing: **28.03.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **04.04.2001 JP 2001105473**

(71) Applicant: **OLYMPUS OPTICAL CO., LTD.
Tokyo (JP)**

(72) Inventor: **Horiuchi, Kazuhito
Ina-gun, Nagano Pref. (JP)**

(74) Representative:
**Winter, Brandl, Fürniss, Hübner, Röss, Kaiser,
Polte Partnerschaft
Patent- und Rechtsanwaltskanzlei
Alois-Steinecker-Strasse 22
85354 Freising (DE)**

(54) **Image device and recording medium storing an imaging program**

(57) An imaging device capable of processing an image as a dynamic image, including an area on attention setter to determine an area on attention in an image detected as a dynamic image from the movement of the dynamic image, a tone characteristic creator to create the tone characteristic of said image on the area on attention determined by said area on attention setter, and an image creator to create a given image on the tone characteristic created at said tone characteristic creator.

## FIG. 2

**EP 1 248 453 A2**

**Description**

Background of the Invention

Field of the Invention

This invention relates to an imaging device, particularly reproducing the tone of an object in an image plane by taking advantage of the dynamic range of the image plane to be input through the controlling of the tone on the condition of the object, and a recording medium storing the imaging program.

Description of the prior art

In an imaging device such as a video camera processing a dynamic image, it is important in the various uses to reproduce the tone of a recorded image appropriately. Particularly, it is required in an object such as a person photographed by a video camera for family use or an abnormal intrusion object detected by a surveillance camera that the degradation of the tone of the object is prevented, and thus, the sense of incongruity of the image of the object is removed entirely. Therefore, the tone of the object must be controlled on the condition of the image.
In this point of view, some tone reproducing technique are proposed as follows.
For example, a tone compensating device and a tone compensating method are disclosed in Japanese Patent No. 2951909 where two image signals having their different exposure degrees per one field are employed as an input signal, and the area of the input signal is divided on the luminance signals of the image signals, and then, the tone compensation is carried out at each area and combined, to realize the tone compensation adjusted at the object.
Also, a controlling method and a recording device for a surveillance camera are disclosed in Japanese Patent Application KOKAI No. 2000-253386 where the shutter speed and the aperture of the camera is varied if an intrusion object is detected by the camera, and thus, the image of the intrusion object is recorded in appropriate luminance.
In the view of the tone reproduction of the object, however, there are some problems in the conventional techniques as mentioned above.
That is, in the technique disclosed in Japanese Patent No. 2951909, the image plane of the input signal is divided on the luminance signals of the two image signals, and thus, the tone compensation is carried out for each area divided, independently. In the case that the object remains over the plural areas divided, however, since the object are compensated in tone over the plural areas, independently, the image of the object may become discontinuity and thus, create the sense of incongruity.
In the technique disclosed in Japanese Patent Application KOKAI No. 2000-253386, the imaging system of the surveillance camera is controlled at the detection of the intrusion object. However, if the intrusion object moves at high speed in a large luminance changing area (the luminance of the intrusion object is changed largely), it is difficult to follow up the intrusion object and thus, control the imaging system in real time.

Summery of the Invention

It is an object of the present invention to provide an imaging device and a recording medium storing an image program where an image, of which the tone is appropriately reproduced entirely by taking advantage of the dynamic range of the image to be input, can be created, without the control of the imaging system and irrespective of the luminance of the object relating to the image.
The invention as defined in claim 1 relates to an imaging device capable of processing an image as a dynamic image, comprising:

an area on attention setter to determine an area on attention in an image detected as a dynamic image from the movement of the dynamic image,
a tone characteristic creator to create the tone characteristic of said image on said area on attention determined by said area on attention setter, and
an image creator to create a given image on said tone characteristic created at said tone characteristic creator.

According to the imaging device defined in claim 1, a given image is detected as a dynamic image, and then, the area on attention of the image is determined at an area on attention setter, and a given tone characteristic is created on the area on attention at a tone characteristic creator. Thereafter, a given image is created on the tone characteristic in an image creator. As a result, the tone of the image can be reproduced appropriately on the area on attention.
The invention as defined in claim 2 is characterized in that in the imaging device as defined in claim 1, the image detected as a dynamic image is composed of plural images obtained by different exposure degrees per field unit or frame unit for a given period of time.

According to the imaging device as defined in claim 2, since the image is composed of plural images obtained by their respective different exposure degrees, a wide dynamic range image can be created. As a result, even though the area on attention is too dark or too bright, and thus, the tone of the image can not be reproduced appropriately, the tone of the image can be reproduced, originated from the wide dynamic range of the image.

The invention as defined in claim 3 is characterized in that in the imaging device as defined in claim 1, the area on attention setter includes a characteristic extractor to extract a characteristic from the image detected as a dynamic image, and the area on attention is determined on the characteristic extracted.

According to the imaging device as defined in claim 3, since the area on attention is determined on an image characteristic extracted at a characteristic extractor, the area on attention is determined on the condition of the characteristic of the image, so that plural areas on attention can be determined appropriately for various images.

The invention as defined in claim 4 is characterized in that in the imaging device as defined in claim 3, at the characteristic extractor, the image detected as a dynamic image is divided into blocks, and the characteristic is extracted at every block.

According to the imaging device as defined in claim 4, since the image plane is divided into plural blocks, and a given characteristic is extracted from each of the blocks, the local characteristics of the image can be extracted appropriately without global influences.

The invention as defined in claim 5 or 10 is characterized in that in the imaging device as defined in claim 3 or 4, the characteristic extracted includes a characteristic relating to the movement of the image detected as a dynamic image.

According to the imaging device as defined in claim 5 or 10, since the extracted characteristic includes a characteristic relating to the movement in the image, the degree of the characteristic is changeable on the degree of the movement in the image, so that the determination of the area on attention and thus, the creation of the tone characteristic can be realized on the movement characteristic.

The invention as defined in claim 6 or 11 is characterized in that in the imaging device as defined in claim 5 or 10, the characteristic relating to the movement is a movement vector relating to an information incorporated in the image detected as a dynamic image for a given period of time.

According to the imaging device as defined in claim 6 or 11, since a movement vector is extracted from informations incorporated in an image for a given period of time at the characteristic extractor, the characteristic of the movement in the image can be represented precisely.

The invention as defined in claim 7 or 12 is characterized in that in the imaging device as defined in claim 3 or 4, the characteristic extracted includes a characteristic extracted on the difference between the images at the past and at the present.

According to the imaging device as defined in claim 7 or 12, since the characteristic extracted includes a characteristic extracted on the difference between the images at the past and at the present, the degree of the characteristic can be varied on the image variation with time, so that the determination of the area on attention and thus, the creation of the tone characteristic can be realized on the movement characteristic.

The invention as defined in claim 8 or 13 is characterized in that in the imaging device as defined in claim 3 or 4, the characteristic extracted includes a characteristic extracted through a filtering process.

According to the imaging device as defined in claim 8 or 13, since the extracted characteristic includes a characteristic filtered, the degree of the characteristic can be changeable on the frequency characteristic in the image, so that the determination of the area on attention and thus, the creation of the tone characteristic can be realized on the frequency characteristic.

The invention as defined in claim 9 is characterized in that in the imaging device as defined in claim 3, at the area on attention setter, a different region from the surrounding region in characteristic is determined as the area on attention through the analysis using one or more characteristics extracted.

According to the imaging device as defined in claim 9, since a different region from the surrounding region in characteristic is determined as said area on attention through the analysis using one or more characteristics extracted, the area on attention can be appropriately extracted and determined.

The invention as defined in claim 14 is characterized in that in the imaging device as defined in claim 4, at the area on attention setter, the area on attention is determined on the blocks of which the characteristics are determined at the characteristic extractor.

According to the imaging device as defined in claim 14, since a block, of which the characteristic is set at the characteristic extractor, is utilized to determine the area on attention, the determination process can be simplified.

The invention as defined in claim 15 is characterized in that in the imaging device as defined in claim 1, at the area on attention setter, the area on attention is determined on an information required in detecting the image as a dynamic image.

According to the imaging device as defined in claim 15, since an information, which is required to obtain an image as a dynamic image, is utilized to determine the area on attention, the area on attention can be determined, corresponding to some conditions such as photographing condition to obtain the image.

The invention as defined in claim 16 is characterized in that in the imaging device as defined in claim 15, the required information is at least one selected from the group consisting of a focus information, a photometry information, a zooming position information, a multi-spot photometry information and an eyes input information.

According to the imaging device as defined in claim 16, since at least one selected from the group consisting of focus information, photometry information, zooming position information, multi-spot photometry information and eyes input information is utilized to determine the area on attention, the area on attention can be determined on the condition at photographing.

The invention as defined in claim 17 is characterized in that in the imaging device as defined in claim 1, at the area on attention setter, three kinds of focus position, which are scenery photograph, person photograph and close-up photograph, are estimated from a focus information, and three kinds of object distribution, which are the whole, main region and center region, are estimated from a photometry information, to determine the area on attention from the combined estimation of the focus positions and the object distributions.

According to the imaging device as defined in claim 17, since at least three kinds of focus position, which are scenery photograph, person photograph and close-up photograph, are estimated from the focus information, and at least three kinds of object distribution, which are the whole, the main region and the center region of an image plane, are estimated, to determine the area on attention from the combined estimation of the two estimation, the area on attention can be determined on the condition at photographing.

The invention as defined in claim 18 is characterized in that in the imaging device as defined in claim 1, at the area on attention setter, a given image analysis is performed, and the area on attention is not determined if a scene switching is detected on the image analysis.

According to the imaging device as defined in claim 18, since the area on attention is not determined if the scene switching is detected from the image on the image analysis, that is, for example, the characteristics obtained are largely distributed in the image, a wrong determination of the area on attention can be prevented. Therefore, the appropriate determination process can be performed, dependent on the image condition.

The invention as defined in claim 19 or 22 is characterized in that in the imaging device as defined in claim 1 or 14, at the tone characteristic creator, a weighted pattern is set on the area on attention so that the area on attention is weighted larger than any other areas if the area on attention is determined at the area on attention setter, and a weighted pattern is set over the image plane of the image detected as a dynamic image so that the image plane is weighted entirely if the area on attention is not determined at the area on attention setter, and thus, the tone characteristic is created on the weighted pattern.

According to the imaging device as defined in claim 19 or 22, a weighted pattern is set on the area on attention, and thus, the area on attention is weighted larger than any other areas if the area on attention is determined, and a weighted pattern is set over the image plane if the area on attention is not determined. Therefore, the weighted pattern can be set appropriately on the image condition such as the presence and the position of the area on attention, and thus, the tone characteristic can be created on the weighted pattern. As a result, the tone characteristic can be created on the image condition, particularly on the area on attention.

The invention as defined in claim 20 or 23 is characterized in that in the imaging device as defined in claim 1 or 18, at the tone characteristic creator, a histogram relating to the luminance signal of the image detected as a dynamic image is determined from the characteristic extracted at the characteristic extractor and the weighted pattern, and the tone characteristic is created on the histogram.

According to the imaging device as defined in claim 20 or 23, a histogram relating to the luminance signal of the image is determined from the characteristic extracted at the characteristic extractor and the weighted pattern, and thus, the tone characteristic is created on the histogram. Therefore, the tone characteristic can be created appropriately on the image condition.

The invention as defined in claim 21 is characterized in that the imaging device as defined in claim 1, at the image creator, the luminance signal of the image detected as a dynamic image is converted on the tone characteristic created at the tone characteristic creator, and the color difference signal of the image detected as a dynamic image is converted on the theoretical limit characteristics of said luminance signal and the color reproduction of the image detected as a dynamic image before and after conversion, and thus, a given image is created on the luminance signal and the color difference signal which are converted.

According to the imaging device as defined in claim 21, the luminance signal of the image is converted on the tone characteristic, and the color-difference signal of the image is converted into a given image on the luminance signals before and after the conversion on the tone characteristic and the theoretical limit characteristic of color reproduction. Therefore, the tone reproduction and the color reproduction of the image converted can be enhanced.

The invention as defined in claim 24 relates to a recording medium comprising an imaging program to provide for a computer to control the operation of an imaging device capable of processing an image as a dynamic image,

an area on attention setting function to determine an area on attention for said image,

a tone characteristic-creating function to create a tone characteristic for said image on said area on attention determined, and

an image-creating function to create a given image on said tone characteristic created.

According to the imaging device as defined in claim 24, if the recorded medium is inserted into an imaging device, the area on attention-determining function, the tone characteristic-creating function and the image-creating function can be performed, and thus, the tone of the image can be appropriately reproduced on the area on attention.

Description of the Preferred Embodiments

For better understanding of the present invention, reference is made to the attached drawings, wherein

Fig. 1 is a block diagram showing a fundamental configuration of a video camera as an imaging device in a first embodiment of the present invention,

Fig. 2 is a block diagram showing the image information-processing circuit of the video camera in the first embodiment of the present invention,

Fig. 3 is an explanatory view showing the creating method of a wide DR image in the wide DR image information-creating circuit shown in Fig. 2,

Fig. 4 are explanatory views showing the detecting method of a movement vector in the movement vector-detecting circuit shown in Fig. 2,

Fig. 5 is a flow chart showing the area on attention-determining algorithm in the area on attention-determining circuit shown in Fig. 2,

Fig. 6 is an explanatory view showing an operation on the area on attention-determining algorithm,

Fig. 7 is a block diagram showing the tone conversion characteristic-creating circuit shown in Fig. 2,

Fig. 8 is an explanatory view showing an operation on the tone conversion characteristic-creating circuit,

Fig. 9 is an explanatory view showing the limit characteristic of color difference information to be used in the image-creating circuit shown in Fig. 2,

Fig. 10 is a block diagram showing the image information-processing circuit shown in Fig. 1 in a second embodiment of the present invention,

Fig. 11 is a flow chart showing the area on attention-determining algorithm in the area on attention-determining circuit shown in Fig. 10,

Fig. 12 is a block diagram showing the image information-processing circuit shown in Fig. 1 in a third embodiment of the present invention,

Fig. 13 is a view showing an estimated photometry division pattern to set a photometry information to be utilized to determine the area on attention, in the third embodiment,

Fig. 14 is a table showing scene-classifying patterns from the focus information and the photometry information, in the third embodiment, and

Fig. 15 are views showing area on attention patterns on their respective classified scene type shown in Fig. 14.

Description of the Preferred Embodiments

This invention will be described in detail hereinafter, with reference to the accompanying figures.

(First Embodiment)

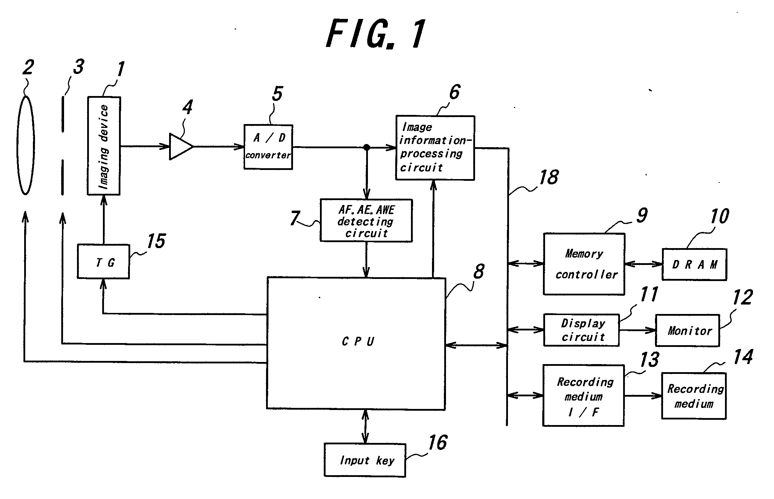

Fig. 1 is a block diagram showing a fundamental configuration of a video camera as an imaging device in a first embodiment of the present invention. The video camera is composed of a single plane type color CCD having an electric shutter function. Concretely, the video camera includes an imaging device 1 to photoelectrically convert and output as an image information the image of an object, a lens 2 to focus the object image on the imaging device 1, an aperture-shutter mechanism 3 to control the passing area and the passing period of the light flux through the lens 2, an amplifier 4 to amplify the image information of which noise component is removed by a correlation double sampling circuit or the like (not shown) after output from the imaging device 1, an A/D converter 5 to convert the analog information amplified at the amplifier 4 into a digital information, an image information processing circuit 6 to perform various process for the digital information, an AF, AE, AWB detecting circuit 7 to detect an AF (auto focus) information, an AE (auto exposure) information and an AWB (auto white balance) information, a recording medium I/F 13 to control the recording condition for a recording medium 14 as described hereinafter such as a digital video (DV) tape or a digital versatile disk (DVD), the recording medium 14 where the image information output from the image information processing circuit 6 is stored, a DRAM 10 to be used as a memory for operation at the color processing or the like of the image information, a memory controller 9 to control the DRAM 10, a displaying circuit 11 to control a monitor 12 as described hereinafter, the monitor 12 to display various images photographed by using this video camera, a timing generator (TG) 15 to generate a timing pulse to drive the imaging device 1, an input key 16 which has a switch to set various photographing modes and a trigger switch to direct and input a photographing operation, etc., and a CPU 8 which is connected with the image information processing circuit 6, the memory controller 9, the displaying circuit 11 and the recording medium I/F 13 via a bus line 18, and receives detection results from the AF, AE, AWB detecting circuit 7 and an input signal from the input key 16, and controls this video camera entirely.

In this video camera, a normal photographing mode and a wide DR photographing mode can be selected appropriately by manual operation for the input key 16 or automatic operation using the CPU 8 through the detection of saturation from the imaging device 1. Then, a given photographing operation is controlled on the selected photographing mode. In the normal photographing mode, a given image information is obtained through a normal condition. On the other hand, in the wide DR photographing mode, plural image informations are photographed with different exposure, and then, combined, to obtain one wide dynamic range (DR) image information.

That is, if the normal photographing mode is selected, a given image information corresponding to one image plane is obtained from the imaging device 1 at one field photographing. On the other hand, if the wide DR photographing mode is selected, a given image information corresponding to plural image planes due to the different exposures (e. g., two image planes due to two exposures) is obtained from the imaging device 1 at one field photographing by using the shutter function of the imaging device 1 or the combination of the aperture-shutter mechanism 3 therewith (e.g., photographing technique using a double speed field drive). Then, the image information is processed in the image information processing circuit 6, dependent on the photographing mode.

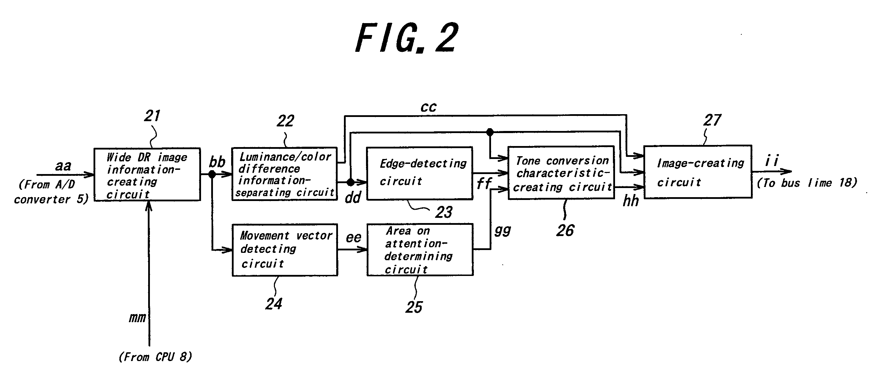

Fig. 2 is a block diagram showing the image information-processing circuit 6 shown in Fig. 1, in the first embodiment of the present invention. The image information-processing circuit 6 includes a wide DR image information-creating circuit 21, a luminance/color difference information-separating circuit 22, an edge-detecting circuit 23, a movement vector-detecting circuit 24, an area on attention-determining circuit 25, a tone conversion characteristic-creating circuit 26 and an image-creating circuit 27.

In the first embodiment, a digital image information "aa" output from the A/D converter 5 is supplied to the wide DR image information-creating circuit 21, to create a wide DR image information "bb", with a controlling information "mm" from the CPU 8. The wide DR image information "bb" is created by combining plural image information originated from their respective different exposure which are obtained by a photographing technique using a double speed field drive, so that their exposure ratio are matched among the image information. In the first embodiment, two kinds of exposure are employed.

The wide DR image information "bb" is supplied to the luminance/color difference information-separating circuit 22, to be separated into a luminance information "dd" and a color difference information "cc".
The luminance information "dd" is supplied to the edge-detecting circuit 23, thereby to output an edge information "ff" via a conventional filter (laplacian, sobel, etc.). In the first embodiment, the edge information "ff" is output as a binary information which shows the presence of the edge.

Also, the wide DR image information "bb" is supplied to the movement vector-detecting circuit 24, to detect a movement vector information "ee". The movement vector information "ee" is supplied to the area on attention-determining circuit 25. At the area on attention-determining circuit 25, an area on attention is determined in an image plane by utilizing the movement vector "ee" by a method as will described later, to output an area on attention information "gg".

The luminance information "dd", the edge information "ff" and the area on attention information "gg" are supplied to the tone conversion characteristic-creating circuit 26, to create and output as a tone conversion characteristic information "hh" a tone conversion characteristic. The tone conversion characteristic information "hh" is supplied with the luminance information "dd" and the color difference information "cc" to the image-creating circuit 27. At the image-creating circuit 27, the luminance information "dd" and the color difference information "cc" are converted on the tone conversion characteristic information "hh", and then, combined, to create and output a conversion image information "ii".

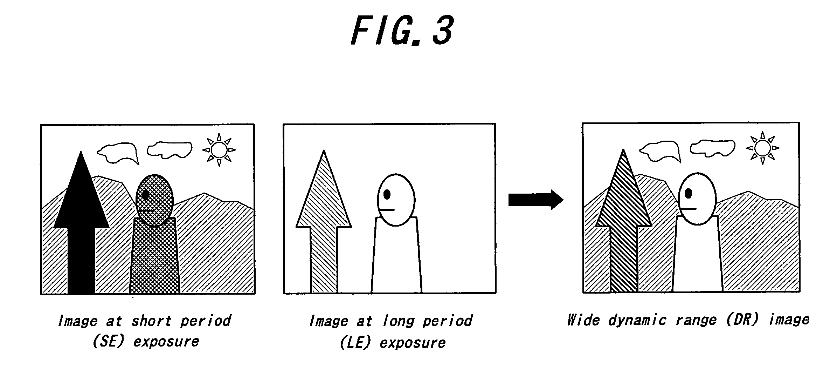

Fig. 3 is an explanatory view showing the creating method of a wide DR image in the wide DR image information-creating circuit 21 shown in Fig. 2. In the first embodiment, two image plane information such as a short period exposure (SE) image and a long period exposure (LE) image are obtained sequentially for one field unit period (1/60 second), and combined, to create a given DR image per one field. In the combination, a saturated area due to the too large luminance in the LE image is replaced by the same area in the SE image. The same area in the SE image is adjust for the saturated area in luminance, and then, combined. In this case, the DR is enlarged by the exposure period ratio of the SE image and the LE image, compared with the DR itself of the imaging device 1. For example, if the exposure period for the SE image is set to 1/1000 second, and the exposure period for the LE image is set to 1/125 second, the DR of the combined image is developed eight times as large as the DR of the imaging device 1.

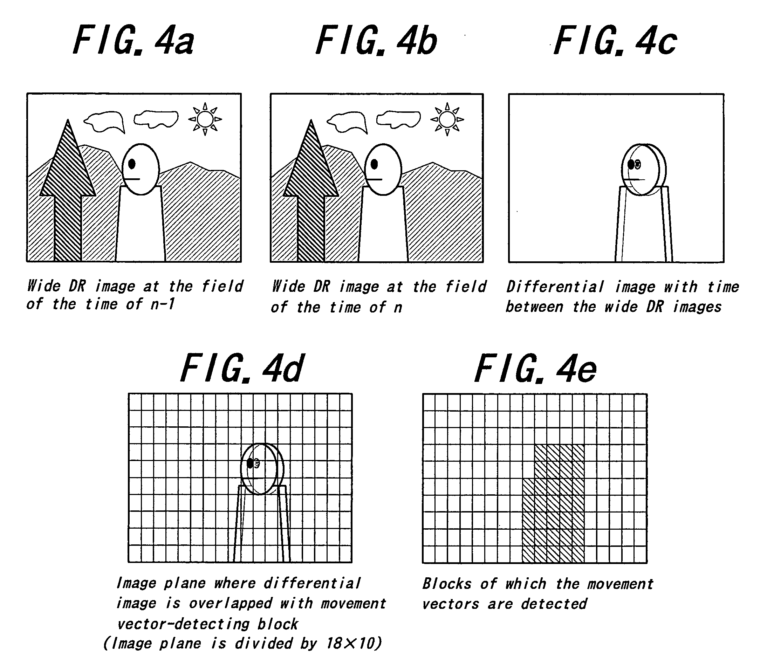

Fig. 4 are explanatory views showing the detecting method of a movement vector in the movement vector-detecting circuit 24 shown in Fig. 2. In Fig. 4, a person as a main object is moved from the right side to the left side on the image plane. In this case, the difference between the wide DR image per one field at the time of n-1 shown in Fig.

4(a) and the wide DR image per one field at the time of n shown in Fig. 4(b) is calculated, to obtain a time-differential image shown in Fig. 4(c).

Then, as shown in Fig. 4(d), the number of blocks to divide the image plane are defined. In this case, the image plane is divided by 18 blocks laterally and 10 blocks longitudinally. The blocks are employed as movement vector-detecting blocks, and in the state as shown in Fig. 4(d), the differential image information (image shift areas between the images of Figs. 4(a) and 4(b) are investigated per block unit. In the case that there are some blocks including the differential image information, it is decided that there are movement vectors in their respective blocks. Therefore, the blocks are set to be movement vector-detecting blocks as shown in Fig. 4(e). Then, given movement vector are detected from the movement vector-detecting blocks.

The movement vectors are detected by template-matching the images of Figs. 4(a) and 4(b) per the block unit, and thus, the most correlative area is calculated. Then, the direction and the distance of the referring block to move to the most correlative area are detected as the movement vector.

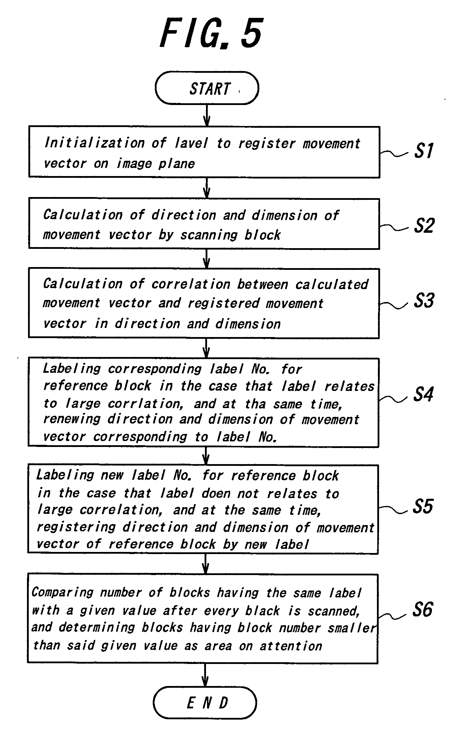

Fig. 5 is a flow chart showing the area on attention-determining algorithm in the area on attention-determining circuit 25 shown in Fig. 2. The algorithm is operated by inputting the movement vector information "ee" per each block detected at the movement vector-detecting circuit 24.

First of all, at the step S1, labels to register the movement vector on the image plane is initialized. In the first embodiment, the direction and the dimension of the movement vector are registered as a label as occasion demands. At the present time, it is required that the direction and the dimension of the movement vector are not registered. That is, plural movement vectors registered as labels are different from one another. Therefore, blocks having almost the same direction and dimension are decided as having the same movement vector, and then, labeled by the same index to be classified.

Then, at the step S2, the block is scanned, to calculate the direction and the dimension of the movement vector. The direction is defined as a movement vector per unit length. For example, the dimension M and the direction (Dx, Dy) of the movement vector is represented by the following equations, on the condition that the coordinate value representing the movement vector in a reference block is set to (x, y).

$$M=Sqrt(x^2+y^2) \tag{1}$$

Sqrt (x):square root of x

$$(Dx, Dy)=(x/M, y/M) \tag{2}$$

Next, at the step S3, the correlation between the calculated direction and dimension of a movement vector and the registered direction and dimension as a label of a movement vector is calculated. In this case, the dimension M and the direction (Dx, Dy) calculated at the step S2 are employed. For example, if the dimension and the direction of the movement vector referred at the present are set to Mr and (Dxr, Dyr), respectively and if the dimension of and the direction of the movement vector already registered as a label(label No. "s")are set to Ms and (Dxs, Dys), respectively, the estimated value Ev representing the correlation is calculated by the following equation.

$$Evrs=\alpha1 \cdot |Mr-Ms|+\alpha2 \cdot |Dxr-Dxs|+\alpha3 \cdot |Dyr-Dys| \tag{3}$$

Here, $\alpha1$, $\alpha2$ and $\alpha3$ designate weighting factors not less than zero. If the weighting factors are varied, the ratio of the dimension and the direction of the movement vector in the estimated value "Evrs" is varied. The estimated value "Evrs" is calculated for all of the labels registered.

Next, at the step S4, in the case that there is a label relating to large correlation, the reference block is labeled by the corresponding label No., and at the same time, the direction and the dimension of the movement vector corresponding to the label No. are renewed. That is, at the step S4, the correlation degree is decided by comparing the estimated value "Evrs" calculated at the step S3 with a given threshold value. At the step S4, if the estimated value "Evrs" is not more than a threshold value Th1, the difference between the movement vectors of the reference block and the labeled block by "s" is decided to be small (the correlation is decided to be large), and thus, the reference block is classified into the group including the labeled block. Then, the reference block is labeled by "s", and the direction and the dimension of the movement vector labeled by "s" are renewed. In this case, the average and the variance of the directions and the dimensions in all of the movement vector labeled by "s" are calculated so that the movement vector of the reference block is incorporated effectively into the movement vectors labeled by "s". The variance is also calculated in consideration of the threshold value (for example, plural threshold values are set for different labels).

Next, at the step S5, in the case that there is no label relating to large correlation, the reference block is labeled by a new label No., and at the same time, the direction and the dimension of the reference block are registered by a new label. That is, at the step S5, if the estimated values "Evrs"s are larger than the threshold value Th1, the difference between the movement vectors of the reference block and the labeled blocks is decided to be large (the correlation is decided to be small), and thus, the reference block is not classified. Therefore, the movement vector of the reference block is registered by a new label, as mentioned above. The new registered label is treated in the same manner as another label. The step S5 is performed at a first block scanning (without movement vectors of which labels are registered).

At last, at the step S6, after all of the blocks are scanned, the number of the blocks which belong to the same label is counted and compared with a given value. If the number of the blocks having the same label is set below the given value, the blocks are determined as an area on attention. Normally, a given threshold value Th2 is predetermined in consideration of the block number over the image plane. Then, if the number of the blocks having the same reference label is set below the threshold value Th2, the block number is decided to be small, and thus, the movement vectors are different from one another.

In the case that a person and a scenery behind the person are photographed by a normal video camera (the size of the person is relatively smaller than that of the scenery), the movement vector relating to the person is larger and the movement vector relating to the scenery is smaller (almost zero) if the person moves in a given direction and is photographed by a stationary video camera. On the other hand, the movement vector relating to the scenery is larger and the movement vector relating to the person is smaller if the video camera follows the moving person. Therefore, an area having different movement vectors is determined as an area to which attention is paid, and then, the block to which the different movement vectors belong is determined as an area on attention. Plural areas on attention may be determined, or no area on attention may be determined. Also, if the number of the blocks having the same label is extremely small, the blocks are determined as a noise, and not as areas on attention.

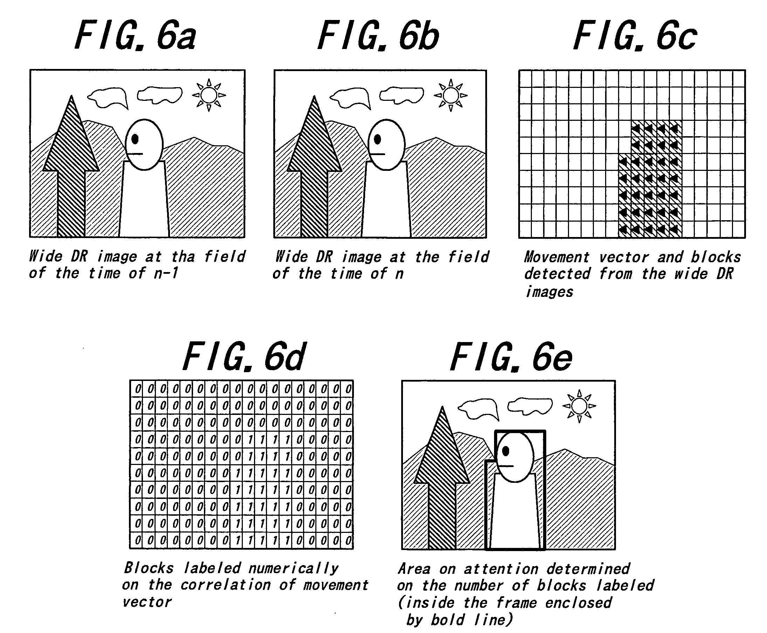

Fig. 6 is an explanatory view showing an operation on the area on attention-determining algorithm. In this case, the difference between the wide DR image per one field at the time of n-1 shown in Fig. 6(a) and the wide DR image per one field at the time of n shown in Fig. 6(b) is calculated, to obtain a time-differential image and thus, a movement vector per a block unit, as shown in Fig. 6(c). In this case, when the above-mentioned area on attention-determining algorithm is employed, the blocks are labeled as shown in Fig. 6(d). In this case, the blocks relating to the person moving from the right side to the left side are labeled by "1", and the blocks relating to the objects without the person are labeled by "0". Then, the numbers of the blocks labeled by "1" or "0" are considered, respectively, and the blocks relating to the person are determined as areas on attention.

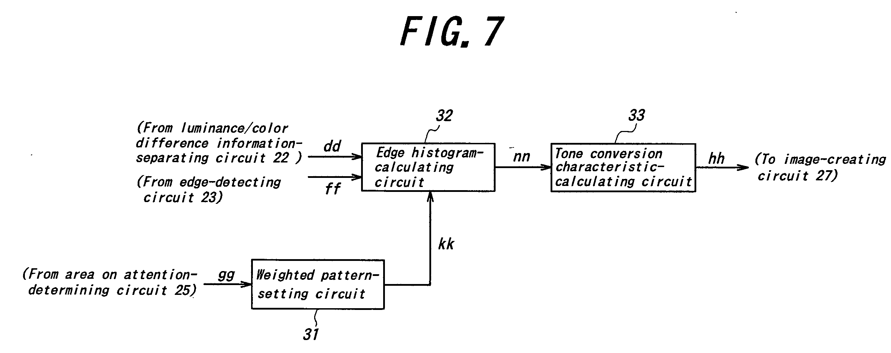

Fig. 7 is a block diagram showing the tone conversion characteristic-creating circuit 26 shown in Fig. 2. The tone conversion characteristic-creating circuit 26 includes a weighted pattern-setting circuit 31, an edge histogram-calculating circuit 32 and a tone conversion characteristic-calculating circuit 33.

At the weighted pattern-setting circuit 31, the area on attention information "gg" is input from the area on attention-determining circuit 25, and thus, the weighted pattern to create the tone conversion characteristic is set, to output a weighted pattern information "kk". By the weighted pattern, the weight of an area on attention is set larger than that of an area on not attention, and thereby, the tone of the area on attention is controlled appropriately.

The weighted pattern information "kk" is supplied to the edge histogram-calculating circuit 32 with the luminance information "dd" created at the luminance/color difference information separating circuit 22 and the edge information "ff" created at the edge-detecting circuit 23, and then, the histogram relating to the luminance information of the edge is calculated, and output as an edge histogram information "nn". In the histogram calculation, the frequency of the luminance information is controlled on the corresponding weight of the weighted pattern information "kk".

The edge histogram information "nn" is supplied to the tone conversion characteristic-calculating circuit 33, and accumulated, to obtain a cumulative edge histogram. The cumulative edge histogram is normalized so as to match the input luminance information and the output luminance information, to obtain the tone conversion characteristic. The tone conversion characteristic is output as a tone conversion characteristic information "hh" for the image-creating circuit 27.

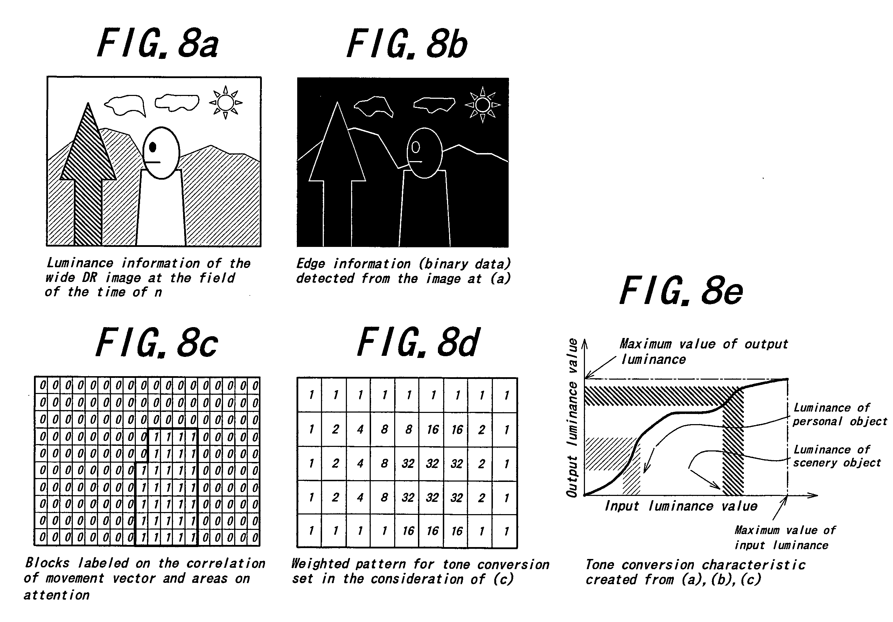

Fig. 8 is an explanatory view showing an operation on the tone conversion characteristic-creating circuit 26. Fig. 8(a) shows the luminance information of a wide DR image per one field at the time of n which is created at the luminance/color difference information-separating circuit 22, and Fig. 8(b) shows the edge information for the luminance information of Fig. 8(a) which is created at the edge-detecting circuit 23. The edge information is calculated via a conventional filter(laplacian, sobel, etc.), and is output as a binary information which shows the presence of the edge, dependent on the calculated value being more than or not more than a given threshold value. Fig. 8(c) shows the blocks labeled on the correlations between the movement vectors and the areas on attention determined.

At the weighted pattern-setting circuit 31, a weighted pattern as shown in Fig. 8(d) is set on the areas on attention shown in Fig. 8(c). The tone conversion characteristic to be created later is controlled by the weighted pattern. The weighted pattern is determined on the kind of object (for example, an object at a short distance or a scenery at a long distance) in addition to the areas on attention. In the weighted pattern shown in Fig. 8(d), the weight is loaded on the center areas larger than on the fringe areas, and intensively loaded on the areas on attention because the person at a short distance is photographed in this embodiment. Each weight is set per movement vector-detecting blocks arranged in 2×2 matrix.

At the edge histogram-calculating circuit 32, the luminance information shown in Fig. 8(a), the edge information shown in Fig. 8(b) and the weighted pattern shown in Fig. 8(d) are combined, to calculate an edge histogram. The term "edge histogram" means a histogram created by counting the frequency for the luminance information where the corresponding edge exists, dependent on the corresponding weight of the weighted pattern shown in Fig. 8(d). Therefore, in Fig. 8(d), the frequency of the histogram relating to the luminance information of edge corresponding to the person is counted most remarkably.

The calculated histogram is supplied to the tone conversion characteristic-calculating circuit 33, to calculate a cumulative histogram, and is normalized so as to match the input luminance information and the output luminance information. As a result, a tone conversion characteristic is created as shown in Fig. 8(e). In Fig. 8(e), given two tone modes depicted by the hatched region are provided to a person area and a scenery area. In this case, the luminance for the person area is set smaller than that for the scenery area. Particularly, since a large weight is loaded for the person area as shown in Fig. 8(d), the tone mode region for the person area is enlarged. Therefore, the tone reproduction for the person area can be enhanced with maintaining the tone of the scenery area. The calculation method of the tone conversion characteristic from the edge histogram in consideration of the weight is described in detail in Japanese Patent Application No. KOKAI No. 2000-228747.

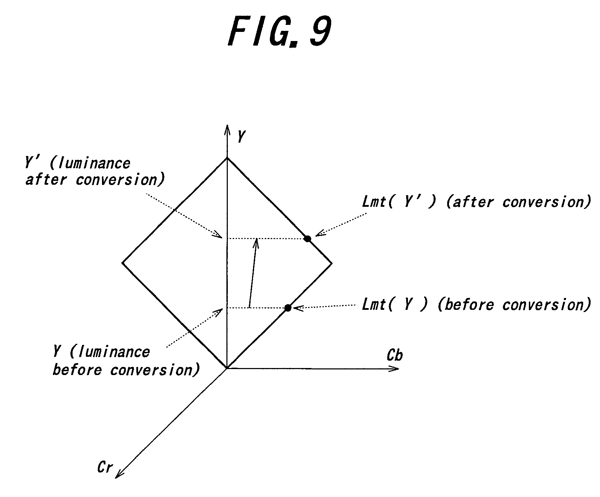

Fig. 9 is an explanatory view showing the limit characteristic of color difference information to be used in the image-creating circuit 27 shown in Fig. 2. At the image-creating circuit 27, the luminance information "dd", the color difference information "cc" and the tone conversion characteristic information "hh" are input, and thereafter, the luminance information is converted on the tone conversion characteristic, at first. If the luminance information before conversion, the luminance information after conversion and the tone conversion characteristic of an information "x" are set to Y, Y' and Trs(x), respectively, the relation between Y and Y' is represented by the following equation.

$$Y'=\text{Trs}(Y) \tag{4}$$

Next, the color difference information is converted in the same manner. In this case, the luminance informations before and after conversion are employed. However, if the ratio of the luminance informations is multiplied simply, the thus converted color difference information may be beyond the reproducible range. Therefore, the reproducible range must be considered. In this case, such a limit characteristic showing the reproducible range of a color difference as shown in Fig. 9 is employed. Concretely, the limit characteristic created from the luminance information before conversion is set to Lmt(Y), and the limit characteristic created from the luminance information after conversion is set to Lmt(Y'). Then, the ratio GC is defined by the following equation.

$$GC=\text{Lmt}(Y')/\text{Lmt}(Y) \tag{5}$$

The ratio GC is employed as a conversion factor for the color difference information. That is, if the color difference informations Cr and Cb relating to the luminance information Y before conversion are multiplied by the GC, the color difference informations Cr' and Cb' are created, corresponding to the luminance information Y' after conversion. The color difference informations Cr' and Cb' are calculated on the tone conversion characteristic relating to the luminance information and the limit characteristic representing the reproducible range of the color difference information, and thus, the tone conversion is performed appropriately within the reproducible range. In Fig. 9, the ratio (Cr/Cb) before conversion is equal to the ratio (Cr'/Cb') after conversion, so that the hue is not changed on the image plane.

The luminance information Y' after conversion and the color difference informations Cr', Cb' are combined, and output as a converted image information.

Although the first embodiment will be described in detail, every kind of variation and modification may be made for the first embodiment. For example, the movement vector may be detected per pixel unit, not block unit. Also, the image may be input per frame unit, not field unit. In the case of employing the frame unit, the double speed field drive may be not employed, and thus, a normal field drive may be employed. Then, a short period exposure (SE) is employed for an odd number field, and a long period exposure (LE) is employed for an even number field. Then, the thus obtained wide DR images are combined, to obtain a wide DR image per one frame. Moreover, an area on attention is determined in consideration of the position information on the image plane (for example, an area on attention is determined on the characteristics of the blocks located at the center of the image plane).

(Second Embodiment)

Next, the second embodiment will be described. The second embodiment may be applied for the same fundamental configuration of the video camera shown in the first embodiment. The same reference numerals and characters are given to the similar components and functions to the ones shown in the first embodiment. Also, if unnecessary, the descriptions relating to similar functions and operations, etc., to the ones shown in the first embodiment may be omitted.

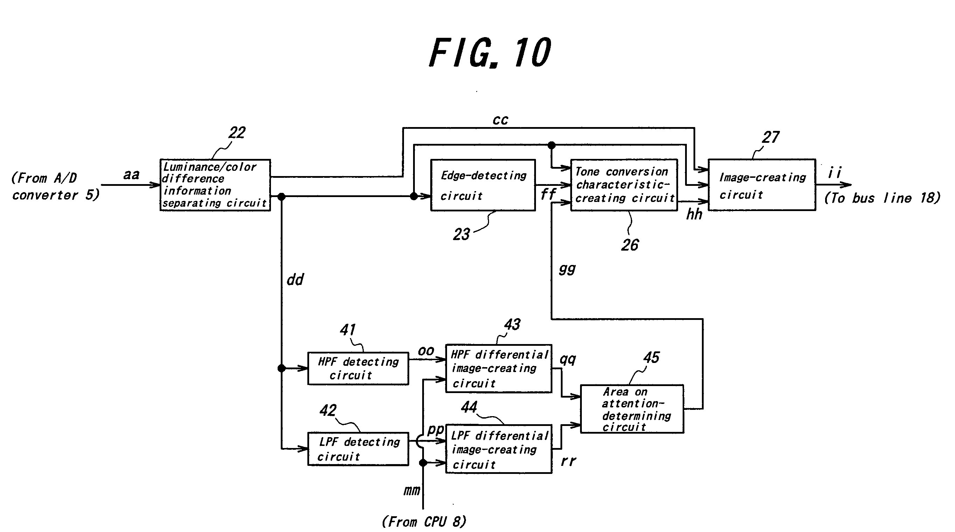

Fig. 10 is a block diagram showing the image information-processing circuit 6 shown in Fig. 1 in this second embodiment. The image information-processing circuit 6 includes the luminance/color difference information-separating circuit 22, the edge-detecting circuit 23, the tone conversion characteristic-creating circuit 26, the image-creating circuit 27, the high-pass filter (HPF)-detecting circuit 41, the low-pass filter (LPF)-detecting circuit 42, the HPF differential image-creating circuit 43, the LPF differential image-creating circuit 44 and the area on attention-determining circuit 45.

For obtaining a wide DR image, in the second embodiment, photographing operation is not performed several times by using different exposures, but is done only one time by using an imaging device to obtain a wider DR image. For example, the wide DR image can be obtained by inputting an image information into an imaging device of 12 bit unit and then, outputting the image information into an output device of 8 bit unit. Also, for setting an area on attention, in the first embodiment, the differential image is obtained from the wide DR images at the adjacent periods of time, to calculate the differential image and thus, detect the movement vectors (movement informations), but in the second embodiment, the images at the adjacent periods of time is divided in frequency, to calculate the differential image per each frequency. The thus obtained differential images are combined. That is, areas on attention are determined without the movement informations.

In the second embodiment, therefore, the digital image information "aa" which is output from the A/D converter 5 is supplied to the luminance/color difference information-separating circuit 22, to be separated into the luminance information "dd" and the color difference information "cc". The luminance information "dd" is processed in the same manner as in the first embodiment at and after the edge-detecting circuit 23 (including the creating process of the tone conversion characteristic).

The luminance information "dd" is also supplied to the HPF detecting circuit 41 and the LPF detecting circuit 42, and then, processed via the HPF at the HPF detecting circuit 41, to detect the high frequency component of the luminance information "dd". The high frequency component is output as a HPF information "oo" to the HPF differential image-creating circuit 43, and then, processed via the LPF, to detect the low frequency component of the luminance information "dd". The low frequency component is output as a LPF information "pp" to the LPF differential image-creating circuit 44.

The HPF differential image-creating circuit 43 and the LPF differential image-creating circuit 44 receive a controlling information "mm" from the CPU 8, and then, calculate differential images from a HPF information and a LPF information in the past, respectively, and store the HPF information "oo" and the LPF information "pp" at the present. In the consideration of the timing of the controlling information "mm", the differential image may be created at every time when an image is input or at a given every period of time (for example, ten times per second). The differential images are output to the area on attention-determining circuit 45, as a HPF differential image information "qq" and a LPF differential image information "rr", respectively.

At the area on attention-determining circuit 45, the HPF differential image information "qq" and the LPF differential image information "rr" are combined, to determine the areas on the image plane to which attention is paid. The thus determined areas are output, as the area on attention information "gg", to the tone conversion characteristic-creating circuit 26, and then, processed in the same manner as in the first embodiment.

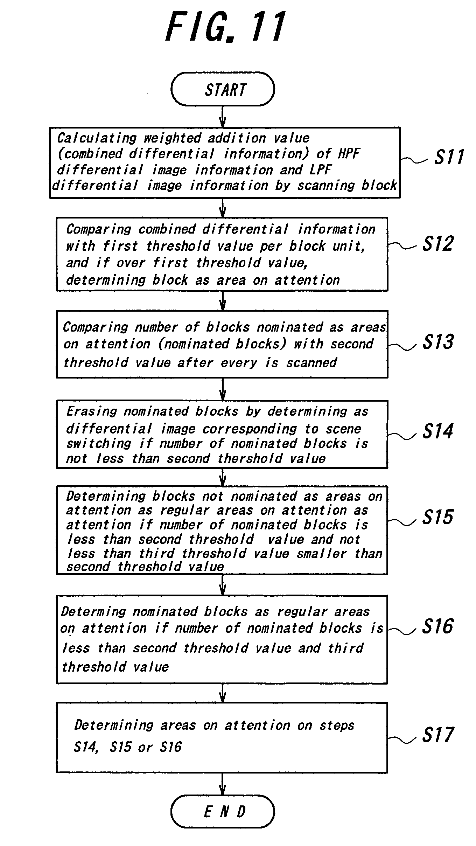

Fig. 11 is a flow chart showing the area on attention-determining algorithm in the area on attention-determining circuit 45 shown in Fig. 10. In this case, supposed that the HPF differential image information "qq" and the LPF differential image information "rr" are provided as blocks of a relatively small size of $8 \times 8$ pixels.

First of all, at the step S11, a given block is scanned, to calculate the weighted addition value of the HPF differential image information "qq" and the LPF differential image information "rr". Since the calculated value is an image differential information which is combined with the HPF differential image information "qq" and the LPF differential image information "rr", it is defined as a combined differential information per block unit. If the HPF differential image information and the LPF differential image information which relate to a block B are set to HB and LB, respectively, the combined differential information IDB is represented by the following equation.

$$IDB = \beta \cdot HB + (1-\beta) \times LB \qquad (0 \leq \beta \leq 1) \qquad (6)$$

Herein, the character "β" means a parameter to control the ratio of the HPF differential image information and the LPF differential image information. If the parameter β is varied, the weight for the HPF differential image information and the LPF differential image information is controlled. In the case that there are relatively few edges on the image plane, the LPF differential image information is weighted. In the case that there are relatively many edges on the image plane, the HPF differential image information is weighted.

Next, at the step S12, the combined differential information per block unit is compared with a first threshold value Th11, and then, if the combined differential information is larger than the threshold value Th11, it is decided to be large. Therefore, the relating block is determined as an area on attention.

Next, at the step S13, after all of the blocks are scanned (after the step S11 and the step S12 are performed), the number of the blocks (defined as nominated block number), which are determined as areas on attention, are calculated, and then, compared with a second threshold value Th12. Th12 is set to be large of e.g., 90% for all of the blocks on the image plane.

Next, at the step S14, if the nominated block number is larger than the threshold Th12, it is decided that a given scene switching occurs in the differential image, and thus, the areas on attention are erased. That is, it is considered that the better part of the image plane is varied if a scene switching occurs in the differential image for the image plane. Therefore, it is prevented that the scene switching is considered as areas on attention by mistake by erasing the areas on attention determined previously.

Next, at the step S15, if the nominated block number is smaller than the threshold Th12, it is compared with a third threshold Th13 smaller than the threshold Th12. Then, if the nominated block number is larger than Th13, the blocks, which are not determined as areas on attention yet, are determined as regular areas on attention. The threshold Th13 is set to a given value of e.g., 60% for all of the blocks on the image plane.

At the step S15, as in the case that a moving person and a scenery behind the moving person is photographed by a video camera (the occupation of the moving person is smaller than the size of the whole image plane, and the moving person is followed by the video camera, the smaller region where the differential information is small, that is, the different region from the surrounding regions in movement, is determined as the areas on attention, for the larger region where the differential information is large.

Nest, at the step S16, if the nominated block number is smaller than the thresholds Th12 and Th13, the blocks which are already determined as the areas on attention are determined as regular areas on attention. At the step 16, as in the case that the moving person is photographed by a stationary video camera (the person is moved in the same image plane), the smaller region where the differential information is large, that is, the different region from the surrounding regions in movement, is determined as the areas on attention, for the larger region where the differential information is small.

At last, at the step S17, the final areas on attention are determined on the steps S14, S15 or S16. That is, if the step S14 is performed, it is decided that there is no area on attention. If the step S15 or S16 is performed, given areas on attention are determined as mentioned above.

As in the first embodiment, plural areas on attention may be determined. If there are few blocks corresponding to an area on attention, the blocks are determined as a noise.

Although the second embodiment will be described in detail, every kind of variation and modification may be made for the second embodiment. For example, the combined differential information may be calculated per pixel unit, not block unit. Moreover, the luminance information may be processed via a band-pass filter, and thus, a given frequency component of the luminance information may be detected, instead of separating the luminance information into frequency components thereof with two kinds of filter (high-pass filter and low-pass filter). Moreover, an area on attention is determined in consideration of the position information on the image plane (for example, an area on attention is determined on the characteristics of the blocks located at the center of the image plane).

(Third Embodiment)

Next, a third embodiment will be described. The third embodiment may be applied for the same fundamental configuration of the video camera shown in the first embodiment. The same reference numerals and characters are given to the similar components and functions to the ones shown in the first embodiment. Also, if unnecessary, the descriptions relating to similar functions and operations, etc., to the ones shown in the first embodiment may be omitted.

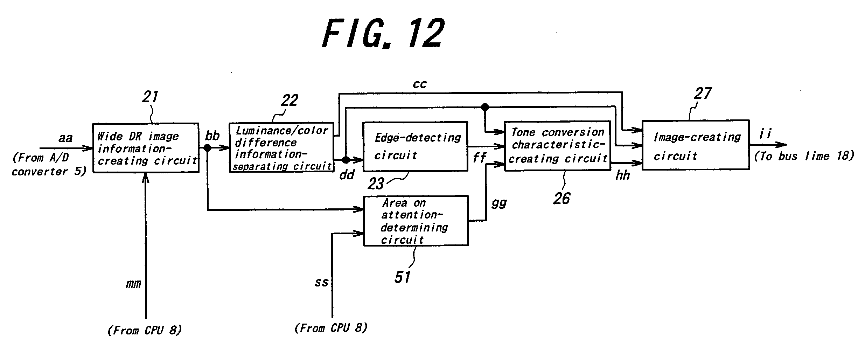

Fig. 12 is a block diagram showing the image information-processing circuit 6 shown in Fig. 1 in the third embodiment. The image information-processing circuit 6 includes the wide DR image information-creating circuit 21, the luminance/color difference information-separating circuit 22, the edge-detecting circuit 23, the tone conversion characteristic-creating circuit 26, and the area on attention-determining circuit 51.

In this embodiment, a wide DR image is created from plural wide DR images using their respective different exposures, but the area on attention is determined on an information required in photographing such as focus information or photometry information, not on a movement vector.

In the third embodiment, therefore, the wide DR image information "bb", which is created at the wide DR image information-creating circuit 21, is supplied directly to the area on attention-determining circuit 51, and at the area on attention-determining circuit 51, an image photographed is estimated on a focus/photometry information "ss" from the CPU 8. Then, a given area on attention is determined from the estimated result, and output, as the area on attention information "gg", to the tone conversion characteristic-creating circuit 26.

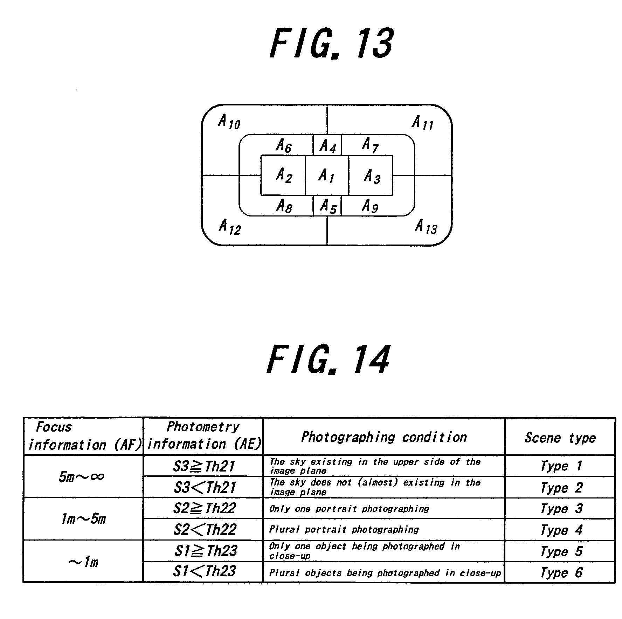

Fig. 13 is a view showing an estimated photometry division pattern to set a photometry information to be utilized to determine the area on attention, in the third embodiment. In this case, an image plane is divided into 13 photometry areas of $A_1$-$A_{13}$, and the estimated photometry values S1-S3 are calculated from area photometry informations such as luminances at their respective areas.

$$S1=|A2-A3| \qquad (7)$$

$$S2=max(|A4-A6|, |A4-A7|) \qquad (8)$$

$$S3=max(A10, A11)-\Sigma Ai/13 \qquad (9)$$

Herein, whether the number of object at the center of an image plane is one or plural at close-up photographing, is estimated by the equation (7), and whether the number of object at the center of an image plane is one or plural at personal photographing such as portrait, is estimated by the equation (8). Then, whether the sky remains or not in the upper side of the image plane at scenery photographing, is estimated by the equation (9). The thus obtained estimated values are defined as photometry informations.

Fig. 14 is a table showing scene-classifying patterns from the focus information and the photometry information, in the third embodiment. An AF information to estimate the distance to an object is employed as the focus information. In the third embodiment, the image plane is classified into six patterns (scene patterns). The scene patterns are classified as follows.

Type 1: the focus information being set to 5m-∞ (scenery photographing), and the photometry information S3 being set to the threshold Th21 or over
(the sky existing in the upper side of the image plane)

Type 2: the focus information being set to 5m-∞(scenery photographing), and the photometry information S3 being set less than the threshold Th21
(the sky does not existing in the upper side of the image plane or the region of the sky is small in the image plane entirely)

Type 3: the focus information being set to 1m-5m (personal photographing), and the photometry information S2 being set to the threshold Th22 or over
(only one portrait photographing)

Type 4: the focus information being set to 1m-5m (personal photographing), and the photometry information S2 being set less than the threshold Th22
(plural portraits photographing)

Type 5: the focus information being set to less than 1m (close-up photographing), and the photometry information S1 being set to the threshold Th23 or over
(only one object being photographed in close-up)
the focus information being set to less than 1m (close-up photographing), and the photometry information S 1 being set less than the threshold Th23.
(plural objects being photographed in close-up)

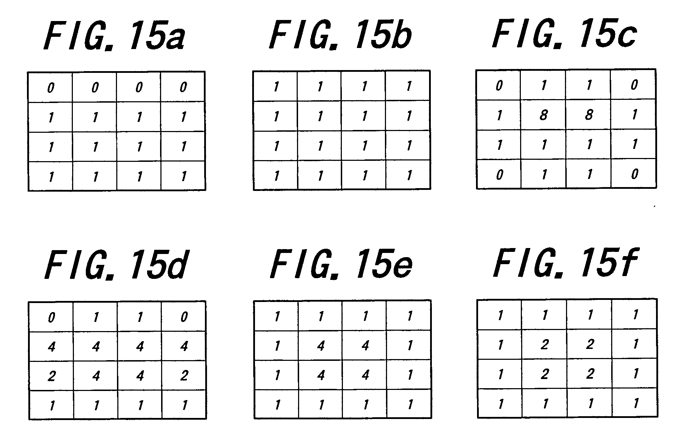

Fig. 15 are views showing area on attention patterns on their respective classified scene type as shown in Fig. 14, in the third embodiment. Fig. 15(a) relates to Type 1. In Fig. 15(a), therefore, the area on attention pattern in the scenery photographing where the sky exists in the upper side of the image plane, is exhibited. As is apparent from Fig. 15(a), the areas on attention are set on the regions without the sky. Fig. 15(b) relates to Type 2. In Fig. 15(b), therefore, the area on attention pattern in the scenery photographing where the sky does not exist in the upper side of the image plane or the region of the sky is small, is exhibited. As is apparent from Fig. 15(b), the areas on attention are set over the image plane entirely. Fig. 15(c) relates to Type 3. In Fig. 15(c), therefore, the area on attention pattern in the only one portrait photographing is exhibited, and as apparent from Fig. 15(c), the areas on attention are set more intensively on the upper side of the image plane than any other regions.

Fig. 15(d) relates to Type 4. In Fig. 15(d), therefore, the area on attention pattern in the plural portraits photographing is exhibited, and as apparent from Fig. 15(d), the areas on attention are set intensively on the center, and the right side and the left side at the center, of the image plane. Fig. 15(e) relates to Type 5. In Fig. 15(e), therefore, the area on attention pattern in the only one object photographing in close-up is exhibited, and as apparent from Fig. 15(e), the areas on attention are set more intensively on the center of the image plane than any other regions. Fig. 15(f) relates to Type 6. In Fig. 15(f), therefore, the area on attention pattern in the plural objects photographing in close-up is exhibited, and as apparent from Fig. 15(f), the areas on attention is set more intensively on the center of the image plane than any other regions, but not more intensively than Type 5.

In the third embodiment, as shown in Fig. 15, the areas on attention are varied numerically on the image plane, which is different from the first and second embodiments. Therefore, the areas on attention patterns themselves may be utilized as weighted patterns at the creation of tone conversion characteristics.

Although the third embodiment will be described in detail, every kind of variation and modification may be made for the third embodiment. For example, at least one of a zooming position information, a multi-spot photometry information and an eyes input information may be employed as the required information at photographing using a video camera, in place of the focus information and the photometry information. Moreover, the areas on attention may be determined by using characteristics in image, as in the first and the second embodiments.

This invention may be performed as follows. The area on attention-determining operation to determine an area on attention in an image detected as a given dynamic image from the movement of the dynamic image, the tone characteristic-creating operation to create the tone characteristic of the image on the area on attention determined, and the image-creating operation to create a given image on the tone characteristic created, are stored in a given recording medium as a program. Then, a driver is provided for an imaging device such as a video camera, and the program is read into the imaging device by a computer (e.g., the CPU 8 shown in Fig. 1) via the driver. As a result, the above-mentioned operations are performed in the imaging device.

As explained above, according to the present invention, since the tone required to reproduce an image is controlled, dependent on an area on attention determined, the tone of the image can be appropriately reproduced entirely by taking advantage of the dynamic range of the image to be input, without the control of the imaging system and irrespective of the luminance of the object relating to the image.

## Claims

1. An imaging device capable of processing an image as a dynamic image, comprising:

   an area on attention setter to determine an area on attention in an image detected as a dynamic image from the movement of the dynamic image,
   a tone characteristic creator to create the tone characteristic of said image on said area on attention determined by said area on attention setter, and
   an image creator to create a given image on said tone characteristic created at said tone characteristic creator.

2. An imaging device as defined in claim 1, wherein said image detected as a dynamic image is composed of plural images obtained by different exposure degrees per field unit or frame unit for a given period of time.

3. An imaging device as defined in claim 1, wherein said area on attention setter includes a characteristic extractor to extract a characteristic from said image detected as a dynamic image, and said area on attention is determined on said characteristic extracted.

4. An imaging device as defined in claim 3, wherein at said characteristic extractor, said image detected as a dynamic image is divided into blocks, and said characteristic is extracted at every block.

5. An imaging device as defined in claim 3 or 4, wherein said characteristic extracted includes a characteristic relating to the movement of said image detected as a dynamic image.

6. An imaging device as defined in claim 5, wherein said characteristic relating to said movement is a movement vector relating to an information incorporated in said image detected as a dynamic image for a given period of time.

7. An imaging device as defined in claim 3 or 4, wherein said characteristic extracted includes a characteristic extracted on the difference between the images at the past and at the present.

**8.** An imaging device as defined in claim 3 or 4, wherein said characteristic extracted includes a characteristic extracted through a filtering process.

**9.** An imaging device as defined in claim 3, wherein at said area on attention setter, a different region from the surrounding region in characteristic is determined as said area on attention through the analysis using one or more characteristics extracted.

**10.** An imaging device as defined in claim 4, wherein at said area on attention setter, said area on attention is determined on the blocks of which the characteristics are determined at said characteristic extractor.

**11.** An imaging device as defined in claim 1, wherein at said area on attention setter, said area on attention is determined on an information required in detecting said image as a dynamic image.

**12.** An imaging device as defined in claim 11, wherein said required information is at least one selected from the group consisting of a focus information, a photometry information, a zooming position information, a multi-spot photometry information and an eyes input information.

**13.** An imaging device as defined in claim 1, wherein at said area on attention setter, three kinds of focus position, which are scenery photograph, person photograph and close-up photograph, are estimated from a focus information, and three kinds of object distribution, which are whole, main region and center region, are estimated from a photometry information, to determine said area on attention from the combined estimation of said focus positions and said object distributions.

**14.** An imaging device as defined in claim 1, wherein at said area on attention setter, a given image analysis is performed, and said area on attention is not determined if a scene switching is detected on said image analysis.

**15.** An imaging device as defined in claim 1 or 14, wherein at said tone characteristic creator, a weighted pattern is set on said area on attention so that said area on attention is weighted larger than any other areas if said area on attention is determined at said area on attention setter, and a weighted pattern is set over the image plane of said image detected as a dynamic image so that said image plane is weighted entirely if said area on attention is not determined at said area on attention setter, and thus, said tone characteristic is created on said weighted pattern.

**16.** An imaging device as defined in claim 15, wherein at said tone characteristic creator, a histogram relating to the luminance signal of said image detected as a dynamic image is determined from a characteristic extracted at said characteristic extractor and said weighted pattern, and said tone characteristic is created on said histogram.

**17.** An imaging device as defined in claim 1, wherein at said image creator, the luminance signal of said image detected as a dynamic image is converted on said tone characteristic created at said tone characteristic creator, and the color difference signal of said image detected as a dynamic image is converted on the theoretical limit characteristics of said luminance signal and the color reproduction of said image detected as a dynamic image before and after conversion, and thus, a given image is created on said luminance signal and said color difference signal which are converted.

**18.** A recording medium comprising an imaging program to provide for a computer to control the operation of an imaging device capable of processing an image as a dynamic image,
an area on attention setting function to determine an area on attention for said image,
a tone characteristic-creating function to create a tone characteristic for said image on said area on attention determined, and
an image-creating function to create a given image on said tone characteristic created.

FIG. 1

EP 1 248 453 A2

# FIG. 2

aa (From A/D converter 5) → **Wide DR image information-creating circuit** (21) → bb → **Luminance/color difference information-separating circuit** (22) → dd → **Edge-detecting circuit** (23) → ff → **Tone conversion characteristic-creating circuit** (26) → hh → **Image-creating circuit** (27) → ii (To bus line 18)

mm (From CPU 8) → 21

bb → **Movement vector detecting circuit** (24) → ee → **Area on attention-determining circuit** (25) → gg

cc

EP 1 248 453 A2

# FIG. 3

Image at short period
(SE) exposure

Image at long period
(LE) exposure

Wide dynamic range (DR) image

## FIG. 4a

Wide DR image at the field of the time of n-1

## FIG. 4b

Wide DR image at the field of the time of n

## FIG. 4c

Differential image with time between the wide DR images

## FIG. 4d

Image plane where differential image is overlapped with movement vector-detecting block (Image plane is divided by 18×10)

## FIG. 4e

Blocks of which the movement vectors are detected

EP 1 248 453 A2

# FIG. 5

START

Initialization of lavel to register movement vector on image plane — S1

Calculation of direction and dimension of movement vector by scanning block — S2

Calculation of correlation between calculated movement vector and registered movement vector in direction and dimension — S3

Labeling corresponding label No. for reference block in the case that label relates to large corrlation, and at tha same time, renewing direction and dimension of movement vector corresponding to label No. — S4

Labeling new label No. for reference block in the case that label doen not relates to large correlation, and at the same time, registering direction and dimension of movement vector of reference block by new label — S5

Comparing number of blocks having the same label with a given value after every black is scanned, and determining blocks having block number smaller than said given value as area on attention — S6

END

## FIG. 6a

Wide DR image at tha field of the time of n-1

## FIG. 6b

Wide DR image at the field of the time of n

## FIG. 6c

Movement vector and blocks detected from the wide DR images

## FIG. 6d

Blocks labeled numerically on the correlation of movement vector

## FIG. 6e

Area on attention determined on the number of blocks labeled (inside the frame enclosed by bold line)

# FIG. 7

EP 1 248 453 A2

(From luminance/color difference information-separating circuit 22 ) $\xrightarrow{dd}$

(From edge-detecting circuit 23) $\xrightarrow{ff}$

32

| Edge histogram-calculating circuit |

$\xrightarrow{nn}$

33

| Tone conversion characteristic-calculating circuit |

$\xrightarrow{hh}$ (To image-creating circuit 27)

(From area on attention-determining circuit 25) $\xrightarrow{gg}$

| Weighted pattern-setting circuit |

$\uparrow kk$

31

# FIG. 8a

Luminance information of the wide DR image at the field of the time of n

# FIG. 8b

Edge information (binary data) detected from the image at (a)

# FIG. 8c

Blocks labeled on the correlation of movement vector and areas on attention

# FIG. 8d

| 1 | 1 | 1 | 1 | 1 | 1 | 1 | 1 | 1 |
|---|---|---|---|---|---|---|---|---|
| 1 | 2 | 4 | 8 | 8 | 16 | 16 | 2 | 1 |
| 1 | 2 | 4 | 8 | 32 | 32 | 32 | 2 | 1 |
| 1 | 2 | 4 | 8 | 32 | 32 | 32 | 2 | 1 |
| 1 | 1 | 1 | 1 | 16 | 16 | 16 | 1 | 1 |

Weighted pattern for tone conversion set in the consideration of (c)

# FIG. 8e

Tone conversion characteristic created from (a), (b), (c)

EP 1 248 453 A2

## FIG. 9

# FIG. 10

*(From A/D converter 5)* → **aa** →

**22** — Luminance/color difference information separating circuit

**cc**

**23** — Edge-detecting circuit — **ff**

**26** — Tone conversion characteristic-creating circuit — **hh**

**27** — Image-creating circuit — **ii** → *(To bus line 18)*

**dd**

**gg**

**41** — HPF detecting circuit — **oo**

**43** — HPF differential image-creating circuit — **qq**

**45** — Area on attention-determining circuit

**42** — LPF detecting circuit — **pp**

**44** — LPF differential image-creating circuit — **rr**

**mm**

*(From CPU 8)*

EP 1 248 453 A2

# FIG. 11

START

Calculating weighted addition value
(combined differential information) of HPF
differential image information and LPF
differential image information by scanning block — S11

Comparing combined differential information
with first threshold value per block unit,
and if over first threshold value,
determining block as area on attention — S12

Comparing number of blocks nominated as areas
on attention (nominated blocks) with second
threshold value after every is scanned — S13

Erasing nominated blocks by determining as
differential image corresponding to scene
switching if number of nominated blocks is
not less than second thershold value — S14

Determining blocks not nominated as areas on
attention as regular areas on attention as
attention if number of nominated blocks is
less than second threshold value and not
less than third threshold value smaller than
second threshold value — S15

Determing nominated blocks as regular areas
on attention if number of nominated blocks is
less than second threshold value and third
threshold value — S16

Determining areas on attention on steps
S14, S15 or S16 — S17

END

## FIG. 12

aa
(From A/D
converter 5)

Wide DR image
information-
creating circuit    21

bb

Luminance/color
difference
information-
separating circuit    22

cc

dd

Edge-detecting
circuit    23

ff

Tone conversion
characteristic-
creating circuit    26

hh

Image-creating
circuit    27

ii
(To bus line 18)

mm
(From CPU 8)

Area on
attention-
determining
circuit    51

gg

ss
(From CPU 8)

# FIG. 13

# FIG. 14

| Focus<br>information (AF) | Photometry<br>information (AE) | Photographing condition | Scene type |
|---|---|---|---|
| 5m~∞ | $S3 \geqq Th21$ | The sky existing in the upper side of the image plane | Type 1 |
| | $S3 < Th21$ | The sky does not (almost) existing in the image plane | Type 2 |
| 1m~5m | $S2 \geqq Th22$ | Only one portrait photographing | Type 3 |
| | $S2 < Th22$ | Plural portrait photographing | Type 4 |
| ~1m | $S1 \geqq Th23$ | Only one object being photographed in close-up | Type 5 |
| | $S1 < Th23$ | Plural objects being photographed in close-up | Type 6 |

27

FIG. 15a

| 0 | 0 | 0 | 0 |
|---|---|---|---|
| 1 | 1 | 1 | 1 |
| 1 | 1 | 1 | 1 |
| 1 | 1 | 1 | 1 |

FIG. 15b

| 1 | 1 | 1 | 1 |
|---|---|---|---|
| 1 | 1 | 1 | 1 |
| 1 | 1 | 1 | 1 |
| 1 | 1 | 1 | 1 |

FIG. 15c

| 0 | 1 | 1 | 0 |
|---|---|---|---|
| 1 | 8 | 8 | 1 |
| 1 | 1 | 1 | 1 |
| 0 | 1 | 1 | 0 |

FIG. 15d

| 0 | 4 | 2 | 1 |
|---|---|---|---|
| 1 | 4 | 4 | 1 |
| 1 | 4 | 4 | 1 |
| 0 | 4 | 2 | 1 |

FIG. 15e

| 1 | 1 | 1 | 1 |
|---|---|---|---|
| 1 | 4 | 4 | 1 |
| 1 | 4 | 4 | 1 |
| 1 | 1 | 1 | 1 |

FIG. 15f

| 1 | 1 | 1 | 1 |
|---|---|---|---|
| 1 | 2 | 2 | 1 |
| 1 | 2 | 2 | 1 |
| 1 | 1 | 1 | 1 |